(19) Europäisches Patentamt
European Patent Office
Office européen des brevets

(11) **EP 2 666 887 B1**

(12) **EUROPEAN PATENT SPECIFICATION**

(45) Date of publication and mention
of the grant of the patent:
**18.02.2015 Bulletin 2015/08**

(51) Int Cl.:
*C25C 3/08* (2006.01)        *C25C 3/12* (2006.01)
*C01B 35/04* (2006.01)

(21) Application number: **12195421.8**

(22) Date of filing: **04.12.2012**

(54) **Process for preparing inert anode material or inert cathode coating material for aluminium electrolysis**

Verfahren zur Herstellung von Inertanodenmaterial oder Inertkathodenbeschichtungsmaterial für Aluminiumelektrolyse

Procédé de préparation de matériau d'anode inerte ou matériau de revêtement de cathode inerte pour l'électrolyse de l'aluminium

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2012 CN 201210161985**

(43) Date of publication of application:
**27.11.2013 Bulletin 2013/48**

(73) Proprietor: **Shenzhen Sunxing Light Alloys Materials Co., Ltd**
**Shenzhen, Guangdong 518000 (CN)**

(72) Inventors:
• **CHEN, Xuemin**
**518000 Shenzhen (CN)**

• **YANG, Jun**
**518000 Shenzhen (CN)**
• **LI, Zhihong**
**518000 Shenzhen (CN)**
• **WU, Weiping**
**518000 Shenzhen (CN)**

(74) Representative: **Prol European Patent Attorneys**
**Postfach 2123**
**90711 Fürth (DE)**

(56) References cited:
**WO-A1-83/00325        CN-A- 102 583 421**
**US-A- 4 526 911        US-A- 4 599 320**
**US-A- 4 726 842**

EP 2 666 887 B1

## Description

## Technical Field of the Invention

The disclosure relates to a process for preparing an inert anode material or inert cathode coating material for aluminium electrolysis.

## Background of the Invention

At present, aluminium electrolytic industry still employs a conventional Hall-Heroult process; electrolyte always takes cryolite-aluminium oxide as a basic system; an existing pre-baked anode cell mainly adopts a carbon anode and a carbon cathode, where the carbon anode is constantly consumed by oxygen generated to form carbon monoxide and carbon dioxide to be discharged into environment during the electrolytic process, and the carbon cathode can not be wetted by molten aluminium and will suffer long-term corrosion of cryolite. In order to prolong the service life of the electrolytic cell, to reduce the carbon emission to environment and to improve the electrolytic efficiency, it is generally necessary to prepare a cheap inert anode material which can be produced on a large scale or prepare an inert cathode material which can be coated on a carbon cathode surface.

The existing industrial process of titanium boride mainly includes the following three methods:

(1) direct reaction of titanium and elemental boron at a high temperature:

$$Ti+2B=TiB_2;$$

(2) boron carbide process, in which titanium dioxide directly reacts with boron carbide in a carbon tube under the existence of C:
$2TiO_2+B_4C+3C=2TiB_2+4CO$, if the carbon tube is of $H_2$ atmosphere, the reaction temperature is between 1800 and 1900 DEG C; if the carbon tube is of vacuum, the reaction temperature can be reduced to between 1650 and 1750 DEG C; and

(3) vapour deposition process, in which $TiCl_4$ and $BCl_3$ are taken as raw materials to perform the following reaction with the participation of $H_2$:
$TiCl_4+BCl_3+5H_2=TiB_2+10HCl$; the deposition temperature is between 8000 and 1000 DEG C, at which abrasive and electronic grade products can be made.

The titanium boride has good wettability to molten aluminium and can resist the corrosion of cryolite; however, the existing industrial process of titanium boride has disadvantages such as demanding reaction conditions, low reaction yield (less than 90%) and high comprehensive cost of production. Since the titanium boride is expensive, it is difficult to realize the wide application of titanium boride in the process for preparing an inert anode material and an inert cathode material.

## Summary of the Invention

In order to solve the technical problem existing in the conventional art, the inventor has done a great deal of research in the preparation and application of titanium boride and unexpectedly finds that the titanium boride can be prepared without demanding reaction conditions by taking the mixture of fluoborate and fluorotitanate as a raw material, the yield rate of reaction product is high and the reaction product has excellent firmness in preparing an inert anode material or inert cathode coating material for aluminium electrolysis.

The disclosure provides a process for preparing an inert anode material or inert cathode coating material for aluminium electrolysis, which includes the following steps:

A) putting aluminium into a reactor, injecting an inert gas to the reactor after vacuumizing, heating the reactor to a temperature of between 700 and 800 DEG C, adding the mixture of dried fluoroborate and fluorotitanate in the reactor and stirring quickly to enable a reaction for 4 to 6 hours to form titanium boride and cryolite, then isolating the titanium boride; and

B) melting the obtained titanium boride with a carbon material, tamping the melt liquid on a carbon cathode surface, sintering the carbon cathode surface to form the inert cathode coating material for aluminium electrolysis; or, mixing the obtained titanium boride with the carbon material evenly, then high-pressure moulding the mixture, and finally sintering the moulded mixture at a high temperature to form the inert anode material for aluminium electrolysis.

With the technical scheme above, the process provided by the disclosure for preparing the inert anode material or inert cathode coating material for aluminium electrolysis has a simple process and requires no demanding reaction conditions; the intermediate material titanium boride is of a short preparation cycle, has advantages such as high yield rate, big specific surface area, many contact angles and controllable aluminium content, has excellent firmness in preparing the inert anode material or inert cathode coating material for aluminium electrolysis, has good wettability to molten aluminium and high resistance to corrosion of cryolite and can prolong the service life of electrolytic cell; thus, the comprehensive cost of aluminium electrolysis is lower.

As a further improvement of the disclosure, the fluoroborate is potassium fluoroborate and the fluorotitanate is potassium fluorotanate, wherein the reaction formula involved is:

$$K_2TiF_6 + 2KBF_4 + \frac{10}{3}Al = TiB_2 + \frac{10}{3}\left[\frac{6}{5}KF \cdot AlF_3\right].$$

As a further improvement of the disclosure, the fluoroborate adopts sodium fluoroborate and the fluorotitanate is sodium flurotitanate, wherein the reaction formula involved is:

$$Na_2TiF_6 + 2NaBF_4 + \frac{10}{3}Al = TiB_2 + \frac{10}{3}\left[\frac{6}{5}NaF \cdot AlF_3\right].$$

As a further improvement of the disclosure, the inert gas is argon gas.
As a further improvement of the disclosure, the carbon material is one or more of carbon, graphite, asphalt and resin.
Compared with the conventional art, the disclosure achieves advantages as follows: the process provided by the disclosure for preparing the inert anode material or inert cathode coating material for aluminium electrolysis has a simple process and requires no demanding reaction conditions; the intermediate material titanium boride is of a short preparation cycle, has advantages such as high yield rate, big specific surface area, many contact angles and controllable aluminium content, has excellent firmness in preparing the inert anode material or inert cathode coating material for aluminium electrolysis, has good wettability to molten aluminium and high resistance to corrosion of cryolite and can prolong the service life of electrolytic cell; thus, the comprehensive cost of aluminium electrolysis is lower.

**Detailed Description of the Embodiments**

The disclosure is described below in further detail through specific embodiments.

Embodiment 1

Weighing 2 tons of aluminium and putting it into a reactor, injecting argon to the reactor for protection after vacuumizing, heating the reactor to a temperature of 750 DEG C, adding the mixture of dried potassium fluoroborate and potassium fluorotitanate in the reactor in accordance with a reaction ratio and stirring quickly to enable a reaction for 5 hours to form titanium boride and cryolite, subjecting the formed titanium boride and cryolite to an existing conventional separation process to obtain titanium boride, drying the titanium boride and weighing it as 1.52 tons, wherein the yield rate of reaction product achieves over 97%.
Mixing the obtained titanium boride with resin in accordance with a weight ratio of 90: (1-10), high-pressure sintering the mixture to prepare an inert anode material; mixing the obtained titanium boride with resin in accordance with a weight ratio of 90: (1-10), melting the mixture and tamping the melt liquid on a carbon cathode surface, sintering the carbon cathode surface to form an inert cathode coating material.

Embodiment 2

Weighing 2 tons of aluminium and putting it into a reactor, injecting argon to the reactor for protection after vacuumizing, heating the reactor to a temperature of 750 DEG C, adding the mixture of dried sodium fluoroborate and sodium fluorotitanate in the reactor in accordance with a reaction ratio and stirring quickly to enable a reaction for 5 hours to form titanium boride and cryolite, subjecting the formed titanium boride and cryolite to an existing conventional separation process to obtain titanium boride, drying the titanium boride and weighing it as 1.53 tons, wherein the reaction product yield achieves over 97%.

Mixing the obtained titanium boride with resin in accordance with a weight ratio of 99: 1, high-pressure sintering the mixture to prepare an inert anode material; mixing the obtained titanium boride with resin in accordance with a weight ratio of 99: 1, melting the mixture and tamping the melt liquid on a carbon cathode surface, sintering the carbon cathode surface to form an inert cathode coating material.

The above are the further detailed description of the disclosure made in conjunction with specific preferred embodiments; it can not be considered that the specific embodiment of the disclosure is only limited to the description above. For the common technicians in the technical field of the disclosure, umpty simple deductions or substitutes can be made without departing from the concept of the disclosure and they are deemed to be included as long as they fall within the scope of the claims.

## Claims

1. A process for preparing an inert anode material or inert cathode coating material for aluminium electrolysis, which includes the following steps: A) putting aluminium into a reactor, injecting an inert gas to the reactor after vacuumizing, heating the reactor to a temperature of between 700 and 800 DEG C, adding the mixture of dried fluoroborate and fluorotitanate in the reactor and stirring quickly to enable a reaction for 4 to 6 hours to form titanium boride and cryolite, then isolating the titanium boride; and B) melting the obtained titanium boride with a carbon material, tamping the melt liquid on a carbon cathode surface, sintering the carbon cathode surface to form the inert cathode coating material for aluminium electrolysis; or, mixing the obtained titanium boride with the carbon material evenly, then high-pressure moulding the mixture, and finally sintering the moulded mixture at a high temperature to form the inert anode material for aluminium electrolysis.

2. The process for preparing the inert anode material or inert cathode coating material for aluminium electrolysis according to claim 1, wherein the fluoroborate is potassium fluoroborate and the fluorotitanate is potassium fluorotitanate.

3. The process for preparing the inert anode material or inert cathode coating material for aluminium electrolysis according to claim 1, wherein the fluoroborate is sodium fluoroborate and the fluorotitanate is sodium fluorotitanate.

4. The process for preparing the inert anode material or inert cathode coating material for aluminium electrolysis according to claim 1, wherein the inert gas is argon gas.

5. The process for preparing the inert anode material or inert cathode coating material for aluminium electrolysis according to any one of claims 1 to 4, wherein the carbon material is one or more of carbon, graphite, asphalt and resin.

## Patentansprüche

1. Verfahren zur Herstellung von Inertanodenmaterial oder Inertkathodenbeschichtungsmaterial für Aluminiumelektrolyse, das die Schritte umfaßt:

   A) Eingeben von Aluminium in ein Reaktorgefäß, Einspritzen eines Inertgases in das Reaktorgefäß nach dem Absaugen, Erwärmen des Reaktorgefäßes auf eine Temperatur zwischen 700 und 800°C, Hinzugeben der Mischung aus getrocknetem Fluorborat und Fluorotitanat in das Reaktorgefäß gegeben und schnelles Umrühren, um innerhalb einer Reaktionszeit von 4 bis 6 Stunden die Bildung von Titanborid und Kryolith zu ermöglichen, danach Isolieren des Titanborids, und B) Schmelzen der gewonnenen Titanborids mit einem Kohlenstoffmaterial, Stampfen der Schmelzflüssigkeit auf eine Kohlenstoffkathodenoberfläche, Sintern der Kohlenstoffkathodenoberfläche, um das Inertkathodenbeschichtungsmaterial für die Aluminiumelektrolyse zu bilden, oder gleichmäßiges Mischen des gewonnenen Titanborids mit dem Kohlenstoffmaterial, danach Hochdruckformen der Mischung, und schließlich Sintern der geformten Mischung bei hoher Temperatur, um das Inertanodenmaterial für die Aluminiumelektrolyse zu bilden.

2. Verfahren zur Herstellung von Inertanodenmaterial oder Inertkathodenbeschichtungsmaterial für Aluminiumelektrolyse nach Anspruch 1, wobei Fluorborat Kaliumfluoroborat ist und Fluorotitanat Kaliumfluorotitanat ist.

3. Verfahren zur Herstellung von Inertanodenmaterial oder Inertkathodenbeschichtungsmaterial für Aluminiumelektrolyse nach Anspruch 1, wobei Fluorborat Natriumfluoroborat ist und Fluorotitanat Natriumfluorotitanat ist.

4. Verfahren zur Herstellung von I nertanodenmaterial oder Inertkathodenbeschichtungsmaterial für Aluminiumelektrolyse nach Anspruch 1, wobei das Inertgas Argongas ist.

5. Verfahren zur Herstellung von I nertanodenmaterial oder Inertkathodenbeschichtungsmaterial für Aluminiumelektrolyse nach einem der Ansprüche 1 bis 4, wobei das Kohlenstoffmaterial eines oder mehrere aus Kohlenstoff, Graphit, Asphalt und Harz ist.

**Revendications**

1. Procédé de préparation d'un matériaud'anode inerte ou d'un matériau de revêtement de cathode inerte pour l'électrolyse d'aluminium comprenant les étapes suivantes :

   A) Placement de l'aluminium dans un réacteur, injection d'un gaz inerte dans le réacteur après mise sous vide, chauffage du réacteur à une température comprise entre 700°Cet 800°C,addition du mélange de fluoroborate et de fluorotitanate séchés dans le réacteur et agitation rapide pour permettre la formation de borure de titane et de cryolithe dans un temps de réaction de 4 à 6 heures, ensuite isolation du borure de titane ; et B) fusion du borure de titane obtenu avec un matériau de carbone, pilonnage du mélange fondu sur la surface d'une cathode de carbone, frittage de la surface de cathode de carbone pour former le matériau de revêtement de cathode inerte pour l'électrolyse d'aluminium ;en variante, mélange uniforme du borure de titane obtenu avec le matériau de carbone, ensuite mise en forme du mélange sous une pression élevée, et finalement frittage du mélange formé sous une température élevée pour former le matériau d'anode inerte pour l'électrolyse d'aluminium.

2. Procédé de préparation d'un matériau d'anode inerte ou d'un matériau de revêtement de cathode inerte pour l'électrolyse d'aluminium conformément à la revendication 1, le fluoroborate étant du fluoroborate de potassium et le fluorotitanate du fluorotitanate de potassium.

3. Procédé de préparation d'un matériau d'anode inerte ou d'un matériau de revêtement de cathode inerte pour l'électrolyse d'aluminium conformément à la revendication 1, le fluoroborate étant du fluoroborate de sodium et le fluorotitanate du fluorotitanate de sodium.

4. Procédé de préparation d'un matériau d'anode inerte ou d'un matériau de revêtement de cathode inerte pour l'électrolyse d'aluminium conformément à la revendication 1, le gaz inerte étant du gaz argon.

5. Procédé de préparation d'un matériau d'anode inerte ou d'un matériau de revêtement de cathode inerte pour l'électrolyse d'aluminium conformément àl'une des revendications 1 à 4, le matériaude carbone étant composé uniquement de ou d'un mélange de carbone, graphite, asphalte et résine.